# EUROPÄISCHE PATENTANMELDUNG

(11) **EP 2 668 877 A1**
(43) Veröffentlichungstag der Anmeldung: **04.12.2013**
(21) Anmeldenummer: 13002807.9
(22) Anmeldetag: 31.05.2013
(51) Int. Cl.: A47F 9/04, F16B 12/02, F16B 12/46

(54) **Sitzkassengrundmodell mit auswechselbarer Eckeinheit**

(30) Priorität: 31.05.2012 DE 102012010640
(71) Anmelder: Josef Wann GmbH, 89269 Vöhringen (DE)
(72) Erfinder: Wann, Rudolf, D-89269 Vöhringen (DE)

(57) **Zusammenfassung**

Die Erfindung betrifft ein Sitzkassengrundmodell (1) mit auswechselbarer Eckeinheit (2 bis 5) in einer Zugangsecke (9) des Sitzkassengrundmodells (1). Dazu weist die Eckeinheit (2 bis 5) einen ersten Eckstreifen (13) für eine erste Zugangstürposition (16) und einen zweiten Eckstreifen (17) für eine zweite Zugangstürposition (20) auf. Der erste und der zweite Eckstreifen (13, 17) sind in einem Winkel zueinander zu der Eckeinheit verbunden, Der erste Eckstreifen (13) weist auf einer vertikalen Randseite (14) eine erste Scharnierpositionen (15) für die erste Zugangstürposition (16) zu dem Sitzkassengrundmodell (1) auf. Der zweite Eckstreifen (17) weist auf einer vertikalen Randseite (18) zweite Scharnierpositionen (19) für die zweite Zugangstürposition (20) zu dem Sitzkassengrundmodell (1) auf. Ferner ist die Eckeinheit aus erstem und zweitem Eckstreifen (13, 17) in unteren Endbereichen (25, 26) des ersten und des zweiten Eckstreifens (13, 17) mindestens im Bereich eines Sitzkassenbodens (11) lösbar fixiert.

## Beschreibung

Die Erfindung betrifft ein Sitzkassengrundmodell mit auswechselbarer Eckeinheit in einer Zugangsecke des Sitzkassengrundmodells. Dazu weist die Eckeinheit einen ersten Eckstreifen für eine erste Zugangstürposition und einen zweiten Eckstreifen für eine zweite Zugangstürposition auf.

Unterschiedliche Sitzkassen sind in Supermärkten und Fachmärkten bereits verbreitet und weisen im Wesentlichen Verbundplattenkonstruktionen für Außenwände, Sichtschutzwände und als Servicefläche auf. In die horizontale Servicefläche sind ein Warentransportband sowie Haltevorrichtungen für einen Warenwerterfassungsautomaten und eine Eingabetastatur eingearbeitet. Oftmals sind auch Kundendisplays oberhalb der Servicefläche an entsprechenden Halterungen angeordnet sowie Geldtabletts oder Kreditkarten- Eingabegeräte vorgesehen. Darüber hinaus ist unterhalb der Servicefläche zum Schutz gegen Fremdeingriff eine Haltevorrichtung für die Geldkassette vorgesehen.

Aus der Druckschrift DE 20 2010 010 178 U1 ist dazu eine Sitzkasse mit variabler Zugangsmöglichkeit bekannt, wobei die Sitzkasse eine L-förmige horizontale Serviceplatte, die sich auf einer frontseitigen Wand und einer serviceseitigen Wand, die länger als die frontseitige Wand ist, sowie teilweise an einer rückseitigen Wand, die der frontseitigen Wand gegenüberliegend angeordnet ist und teilweise an einer begrenzungsseitigen Wand, die der serviceseitigen Wand gegenüberangeordnet ist abstützt, und wobei die rückseitige Wand Wandsegmente oder eine Zugangstür variabler Breite und Wandsegmente aufweist. Die variablen Zusatzmöglichkeiten beschränken sich bei der bekannten Sitzkasse auf miteinander kombinierbare Wandsegmente und Türblätter, wobei die unterschiedlich angeordneten Türblätter an freistehenden Randseiten von Wandsegmenten angeordnet sind, um eine Vielfalt der Zugänge zu gewährleisten und Lösungen mit starren nicht auswechselbaren Eckkonstruktionen, die jeweils nur für einen Sitzkassentypus einzusetzen sind, zu überwinden.

Ein Nachteil derartiger Sitzkassen bleibt jedoch, dass sie in unterschiedlichen Versionen wie linkszugänglicher Einzelkasse, rechtszugänglicher Einzelkasse oder zentralzugängliche Doppelkasse als Sitzkasseninsel weiterhin Einzelanfertigungen darstellen und kein wandelbares Grundmodell bilden. Beim Einsatz von derartigen Sitzkassen hat sich als weiterer Nachteil erwiesen, dass eine schnelle Anpassung an räumliche Gegebenheiten eines Supermarktes oder eines Fachmarktes nur im begrenzten Umfang möglich ist und oftmals eine vollständige Neukonstruktion der Sitzkassen im Bereich der Zugänge zu den Sitzkassen erfordert. Dabei müssen Brandschutzvorschriften berücksichtigt, arbeitsrechtliche Vorschriften eingearbeitet und Unfallverhütungsvorschriften beachtet werden.

Aufgabe der Erfindung ist es, ein Sitzkassengrundmodell zu schaffen, das im Sitzkassenzugangsbereich derart gestaltet ist, dass unterschiedliche Sitzkassenversionen durch Auswechseln weniger Bauelemente realisierbar sind.

Diese Aufgabe wird mit dem unabhängigen Anspruch 1 gelöst. Vorteilhafte Weiterbildungen der Erfindung ergeben sich aus den abhängigen Ansprüchen.

Eine Ausführungsform der Erfindung weist ein Sitzkassengrundmodell mit auswechselbarer Eckeinheit in einer Zugangsecke des Sitzkassengrundmodells auf. Dazu weist die Eckeinheit einen ersten Eckstreifen für eine erste Zugangstürposition und einen zweiten Eckstreifen für eine zweite Zugangstürposition auf. Der erste und der zweite Eckstreifen sind in einem Winkel zueinander zu der Eckeinheit verbunden. Der erste Eckstreifen weist auf einer vertikalen Randseite eine erste Scharnierpositionen für die erste Zugangstürposition zu dem Sitzkassengrundmodell auf. Der zweite Eckstreifen weist auf einer vertikalen Randseite zweite Scharnierpositionen für die zweite Zugangstürposition zu dem Sitzkassengrundmodell auf. Ferner ist die Eckeinheit aus erstem und zweitem Eckstreifen in unteren Endbereichen des ersten und des zweiten Eckstreifens mindestens im Bereich eines Sitzkassenbodens lösbar fixiert.

Durch eine derartige auswechselbare Eckeinheit kann insbesondere der Zugang zu dem Sitzkassengrundmodell schnell und kostengünstig an unterschiedliche Räumlichkeiten und Anordnungen des Sitzkassengrundmodells in einem Fachmarkt angepasst werden, da lediglich ein Umsetzen der lösbaren und auswechselbaren Eckeinheit aus zwei Eckstreifen an dem vorgesehenen Zugangsbereich des Sitzkassengrundmodells anzubauen oder auszuwechseln ist. Außerdem kann zur lösbaren Fixierung neben dem Sitzkassenboden auch der unterhalb des Sitzkassenbodens angeordnete Sitzkassensockel eingesetzt werden und damit die Stabilität der Eckeinheit weiter erhöht werden.

In einer weiteren Ausführungsform der Erfindung weist die Eckeinheit des Sitzkassengrundmodells einen zusätzlichen Ecksockel auf, der mit den beiden Eckstreifen die Eckeinheit bilden kann und in einem Zugangsbereich mit einem Sitzkassenboden und/oder dem Sitzkassensockel des Sitzkassengrundmodells, auf dem der Sitzkassenboden angeordnet ist, lösbar verbunden ist.

Der Ecksockel kann in einer weiteren Ausführungsform der Erfindung als Metallwinkel mit metallischer Grundplatte ausgebildet sein. Die metallische Grundplatte kann auf, unter oder in der Zugangsecke lösbar fixiert sein und vertikale Schenkel, an welchen die Eckstreifen fixierbar sind, aufweisen. Ein derartiger metallischer Ecksockel verleiht der Eckeinheit aus Ecksockel und Eckstreifen eine weiter erhöhte Stabilität, die sicherstellt, dass ein Zugangstürblatt an einer der Randseiten der Eckstreifen an den vorhandenen Zugangsscharnierpositionen Schwenkbar angebracht werden kann.

Weiterhin ist es vorgesehen, dass der Ecksockel als Holz oder Kunststoffsockel ausgebildet ist und auf der Zugangsecke lösbar fixiert ist und vertikale Seitenflächen aufweist, an welchen die Eckstreifen fixierbar sind. Ein derartiger Holzsockel oder Kunststoffsockel ist in vorteilhafter Weise mittels Schraubverbindungen sowohl mit dem Sitzkassenboden des Sitzkassengrundmodells als auch mit den Eckstreifen über Schrauben lösbar verschraubbar, um eine stabile auswechselbare Eckeinheit zu bilden.

In einer bevorzugten Ausführungsform der Erfindung ist der Ecksockel als Sockelbereich eines Eckbalkens ausgebildet, wobei der Eckbalken auf der Zugangsecke lösbar fixiert ist und vertikale Seitenflächen aufweist, an welchen die Eckstreifen fixierbar sind. Dazu können die Eckstreifen in einer weiteren Ausführungsform der Erfindung als Brettstreifen ausgebildet sein, so dass sich eine ästhetisch ansprechende Eckeinheit ergibt, die mittels Außenbeschichtungen einem Verbundplattendesign oder einem Mineralstoffdesigne des Sitzkassengrundmodells angepasst sein kann.

Darüber hinaus ist es vorgesehen, dass die Eckstreifen mit unteren Endbereichen den Ecksockel nach unten hin überragen. Die nach unten überragenden Endbereiche der Eckstreifen können an Bodenrandflächen der Zugangsecke des Sitzkassengrundmodells lösbar fixiert sein und/oder zusätzlich mit einem Eckbereich des Sitzkassensockels lösbar verbunden sein, was der Eckeinheit eine zusätzliche Stabilität verleiht.

Auch kann ein einzelnes Sitzkassengrundmodell zu einer Insellösung aus zwei Sitzkassengrundmodelle ohne weiteres aufgestockt werden, indem die beiden Sitzkassengrundmodelle mit ihren begrenzungsseitigen Wänden aneinander gestellt werden und ein gemeinsamer Zugang zu beiden Sitzkassen von der gemeinsamen Rückseite aus geschaffen wird. In diesem Fall wird die auswechselbare Eckeinheit beider Sitzkassengrundmodelle weggelassen und eine Segmentierung der Rückseite mit einer zentralen einheitlichen Zugangstür und schmalen Ausgleichs-Wandsegmenten der jeweils etwa halben Türblattbreite beiderseits der zentralen Zugangstür durchgeführt. Diese Zugangstür kann jedoch auch Ihrerseits in zwei Zugangstürflügel halbiert werden, die mit Schwingscharnieren an den Ausgleichs-Wandsegmenten schwingend angeordnet sein können.

In einer weiteren Ausführungsform der Erfindung ist es vorgesehen, dass die Eckeinheit zusätzlich einen Stabilisierungswinkel oder Verblendwinkel aufweist, der auf vertikalen Stoßrändern der Eckstreifen lösbar fixiert ist. Mit den vertikalen Stoßrändern liegen die Eckstreifen aufeinander und werden durch den Stabilisierungswinkel bzw. den Verblendwinkel von außen nicht mehr sichtbar, so dass unter dem Verblendwinkel oder Stabilisierungswinkel Verschraubungen der Eckstreifen zu einer Eckeinheit nicht sichtbar sind. Außerdem kann ein derartiger Verblendwinkel abhängig vom Material bei stoffschlüssiger Verbindung mit den Eckstreifen die Stabilität der Eckeinheit weiter verbessern.

In einer weiteren Ausführungsform der Erfindung kann die Eckeinheit zusätzlich einen Stabilisierungsstab mit einem quadratischen Profil aufweisen, der mit vertikalen Stoßrändern der Eckstreifen stoffschlüssig verbunden ist. Dazu kann der Stabilisierungsstab in seinem quadratischen Profil auf die Stärke der Eckstreifen abgestimmt sein, so dass die Eckstreifen mit ihren vertikalen Stoßrändern an dem Stabilisierungsstab im rechten Winkel zueinander anliegen.

Darüber hinaus kann in einer weiteren Ausführungsform der Erfindung vorgesehen werden, dass der Stabilisierungsstab im Sitzkassenbodenbereich Flacheisenschenkel aufweist, die in einem rechten Winkel zueinander und zu dem Stabilisierungsstab angeordnet sind. Die von dem Fußbereich des Stabilisierungsstabes ausgehenden Flacheisenschenkel können dabei eine Breite aufweisen, die der Dicke des Sitzkassenbodens in der Zugangsecke entspricht, so dass die Flacheisenschenkel des Stabilisierungsstabes mit dem Sitzkassenboden lösbar fixiert werden können.

Sollten diese Maßnahmen nicht vollständig ausreichen, so wurde bereits oben erwähnt, dass auch Stabilisierungsstäbe vorzugsweise aus einem quadratischen, dreieckigen oder rundem Hohl- oder Vollprofil die Eckeinheit weiter verstärken können. Dabei kann grundlegend ein derartiger Stabilisierungsstab auf einem Eckbereich des Ecksockels angeordnet werden oder in eine entsprechende Aussparung des Eckbalkens vorgesehen werden.

Eine weitere Möglichkeit um der Eckeinheit mit Ecksockel oder mit Eckbalken eine erhöhte Stabilität zu geben, besteht darin, eine entsprechende Aussparung in Form eines Spundlochs im Eckbereich des Sitzkassengrundmodells einzulassen, in die ein Spundansatz vorzugsweise des Ecksockels oder des Eckbalkens eingespundet werden kann, so dass der Ecksockel bzw. der Eckbalken mit Ecksockel und Spundansatz in dem Spundloch formschlüssig zu einer lösbaren Spundung eingespundet werden kann.

Weiterhin ist es vorgesehen, dass wenigstens eine Langschraube als Spannschraube durch den Eckbalken mit Ecksockel hindurchragt und in einem Fußbereich des Ecksockels oder des Eckbalkens mit einer Gewindebohrung einer Metallplatte oder einer eingelegten Mutter zusammenwirkt und den Eckbalken auf dem Sitzkassenboden in dem Eckbereich des Sitzkassengrundmodells fixiert. Dabei kann der Ecksockel einen Hartholz- oder Kunststoffklotz aufweisen, in den die Mutter eingelassen oder in dem die Mutter befestigt ist. Im oberen Bereich des Eckbalkens kann eine Abdeckkappe den Schraubenkopf der Langschraube bedecken. Diese Lösung hat den Vorteil, dass ein Wechsel der Eckeinheit unkompliziert und schnell durchführbar ist, um das Sitzkassengrundmodell in unterschiedliche Sitzkassenmodelle wie oben beschrieben zu wandeln.

Weiterhin ist es vorgesehen, dass an einem der Eckstreifen an den Scharnierpositionen Scharniere eines Zugangstürblattes fixiert sind und an dem anderen der beiden Eckstreifen an den Scharnierpositionen mechanische Koppelelemente eines Wandsegmentes fixiert sind, wobei das Wandsegment der Größe eines Eingangstürblattes entspricht. Dadurch kann mit diesem Sitzkassengrundmodell das Zugangstürblatt an der, auswechselbaren Eckeinheit derart variiert werden, dass der Zugang zu der Sitzkasse von einer Rückwand oder von einer Seitenwand möglich wird, indem Wandsegment und Zugangstürblatt ihre Positionen wechseln.

Darüber hinaus ist es möglich, dass die Eckeinheit für ein linksseitig zugängliches Sitzkassengrundmodell als L-Sitzkasse und auch für ein rechtsseitig zugängliches Sitzkassengrundmodell als R-Sitzkasse durch einfaches Drehen der Eckeinheit um 90° einsetzbar ist. Bei der linksseitig zugänglichen Kasse - der L-Sitzkasse - ist der Kundenservice mit Warentransportband sowie Registrier- und Kassierservice vom Kunden aus gesehen, der das Geschäft verlässt, auf der linken Seite der Sitzkasse angeordnet, während bei der rechtsseitig zugänglichen Sitzkasse der - R-Sitzkasse - geht der Kunde rechtsseitig an der Sitzkasse mit Warentransportband und Registrier- und Kassierservice vorbei.

Da das erfindungsgemäße Sitzkassengrundmodell aufgrund der auswechselbaren Eckeinheit jeweils zwei Zugangsmöglichkeiten für die linksseitige L-Kasse sowie für die rechtsseitige R-Kasse bereithält, ergeben sich damit bereits vier Sitzkassenmodelle aus einem Sitzkassengrundmodell, ohne dass eine grundlegende Neukonstruktion des Sitzkassengrundmodells erforderlich ist. Lediglich ist die eine Eckeinheit um 90° zu drehen. Somit ist es möglich für beide Sitzkassengrundmodelle ohne gravierende Umbauten jeweils zwei Zugangsmöglichkeiten mithilfe der einen, auswechselbaren Eckeinheit zu realisieren.

Darüber hinaus eröffnet das erfindungsgemäße Sitzkassengrundmodell die Möglichkeiten zwei Sitzkassengrundmodelle für linksseitig und rechtsseitig zugängliche spiegelbildliche Sitzkassengrundmodelle zu einer Sitzkasseninsel unter Auswechseln der Eckeinheit gegen ein Bodenabdeckelement mit wenigen Handgriffen zu realisieren. Ein derartiges Bodenabdeckelement kann eine Schwelle aufweisen, die verhindert, dass beispielsweise zwei Rollgestelle der beiden rollbaren Kassenstühle einer Sitzkasseninsel ineinander verhaken, womit die Arbeitssicherheit erhöht und die betriebliche Unfallgefahr vermindert wird. Ein derartiges Rollbereichsbegrenzungselement hilft somit Arbeitsunfälle zu verhindern und begrenzt dennoch nicht den Aktionsbereich des Kassenpersonals innerhalb der Sitzkasseninsel.

Das Bodenabdeckelement mit Rollbereichsbegrenzungselement kann anstelle der auswechselbaren Eckeinheit eingesetzt werden, um damit den Boden im Bereich der fehlenden Eckeinheiten abzudecken und ein zentrales Zugangstürblatt anstelle der Eckeinheiten anzubauen. Die Breite des zentralen Türblattes kann der Breite des Zugangstürblattes des Sitzkassengrundmodells entsprechen, wobei in der Rückseite der aus zwei Sitzkassengrundmodellen entstandenen Sitzkasseninsel lediglich zwei Wandsegmente von ca. halber Zugangstürblattbreite einzusetzen sind. Außerdem kann, wenn der stirnseitige Stellplatz nicht benötigt wird, oder es aus anderen Platzgründen notwendig ist, eine Insel nur durch eine L- und eine R- Kasse, die auf dem Sitzkassengrundmodell basieren, mit einer einzigen der Eckeinheiten zusammengestellt werden.

Durch diesen relativ kostengünstigen Umbau von zwei Sitzkassengrundmodellen zu einer Sitzkasseninsel, die eine links und eine rechts zugängliche Sitzkasse des Sitzkassengrundmodells aufweist, sind die Türscharniere des zentralen Zugangstürblattes in Türscharnierpositionen einer vertikalen Randseite eines der Wandsegmente von halber Zugangsblattbreite angeordnet. Andererseits ist es auch möglich, das Zugangstürblatt in zwei Zuggangstürflügel aufzuteilen, wobei jeder der Zusatztürflügel wiederum ca. die halbe Zugangstürblattbreite aufweist und die Türscharniere an den Türscharnierpositionen der vertikalen Randseiten der Wandsegmente Schwingtürscharniere sein können.

Weiterhin ist es vorgesehen, dass zur lösbaren Fixierung Holzschrauben von unten durch den Sitzkassenboden und/oder durch einen Eckbereich eines Sitzkassensockels in den Eckbalken und/oder in die unteren Endbereiche der Eckstreifen lösbar fixierend hineinragen. Durch diese Holzschrauben kann ein freistehender Eckbalken aus Holz einen auswechselbaren stabilen Stand ausbilden. Darüber hinaus kann die Stabilität durch entsprechend von unten eingeführte Holzschrauben in die Eckstreifen weiter vergrößert werden. Ferner kann durch seitliche Schrauben, die abgedeckt werden können, oder durch Schrauben in den Scharnierpositionen die Stabilität weiter erhöht werden.

Die Erfindung wird nun anhand der beigefügten Figuren näher erläutert.
- Figur 1A: zeigt eine schematische perspektivische Ansicht einer Eckeinheit für einen Eingangsbereich eines Sitzkassengrundmodells gemäß einer ersten Ausführungsform der Erfindung;
- Figur 1B: zeigt eine schematische perspektivische Ansicht einer Eckeinheit gemäß einer zweiten Ausführungsform der Erfindung;
- Figur 2: zeigt eine schematische perspektivische Ansicht einer Eckeinheit gemäß einer dritten Ausführungsform der Erfindung;
- Figur 3: zeigt eine schematische perspektivische Ansicht einer Eckeinheit gemäß einer vierten Ausführungsform der Erfindung;
- Figur 4: zeigt eine schematische perspektivische Ansicht einer Eckeinheit gemäß einer fünften Ausführungsform der Erfindung;
- Figur 5: zeigt eine schematische perspektivische Ansicht einer Eckeinheit gemäß einer sechsten Ausführungsform der Erfindung
- Figur 6: zeigt eine schematische perspektivische Ansicht einer Eckeinheit gemäß einer sechsten Ausführungsform der Erfindung;
- Figur 7: zeigt mit Figuren 7A, 7B und 7C eine schematische perspektivische Ansicht einer Eckeinheit gemäß einer siebten Ausführungsform der Erfindung;
- Figur 8: zeigt mit den Figuren 8A und 8B schematische Ansichten einer linksseitigen Sitzkasse als erste Modifikation des Sitzkassengrundmodells;
- Figur 9: zeigt mit den Figuren 8A und 9B schematische Ansichten einer linksseitigen Sitzkasse als zweite Modifikation des Sitzkassengrundmodells;
- Figur 10: zeigt mit den Figuren 10A und 10B schematische Ansichten einer rechtsseitigen Sitzkasse als weitere Modifikation des Sitzkassengrundmodells;
- Figur 11: zeigt mit den Figuren 11A und 11B schematische Ansichten einer rechtsseitigen Sitzkasse als weitere Modifikation des Sitzkassengrundmodells;
- Figur 12: zeigt mit den Figuren 12A und 12B schematische Ansichten einer Sitzkasseninsel aus zwei Sitzkassengrundmodellen als weitere Modifikation der Sitzkassengrundmodelle;
- Figur 13: zeigt mit den Figuren 13A und 13B schematische Ansichten einer Modifikation der Sitzkasseninsel gemäß Figur 12 mit zwei Sitzkassengrundmodellen.

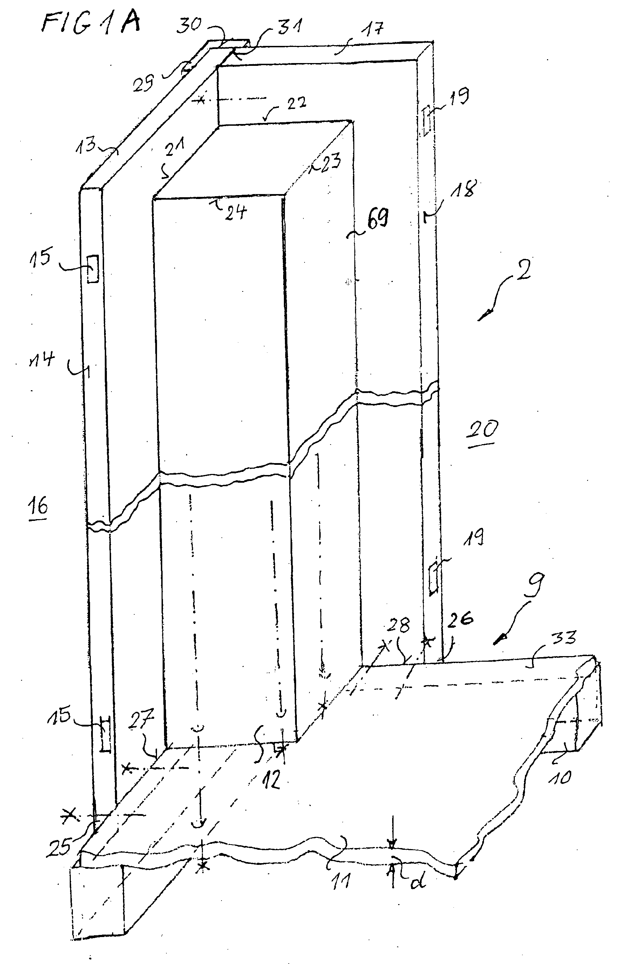

Figur 1A zeigt eine schematische perspektivische Ansicht einer Eckeinheit 2 für einen Zugangsbereich eines Sitzkassengrundmodells 1 gemäß einer ersten Ausführungsform der Erfindung. Die Eckeinheit 2 ist auswechselbar, da sie lediglich über entsprechende Holzschrauben wie beispielsweise Spaxschrauben in einer Zugangsecke 9 unter Einbeziehung des Eckbereichs des Sitzkassensockels 10 und des Sitzkassenbodens 11 lösbar angeschraubt ist.

Die Eckeinheit 2 besteht in dieser Ausführungsform der Erfindung im Wesentlichen aus drei Bauelementen, einem stabilen Ecksockel 12, der weitestgehend von einem hölzernen Eckbalken 69 oder einem Schichtpressstoffbalken gebildet ist, sowie aus rechtwinklig zueinander stehenden ersten und zweiten Eckstreifen 13 und 17 aus Holz- oder Schichtstoffstreifen, wobei die Eckstreifen 13 und 17 nicht nur mit dem Ecksockel 12 verschraubt sind, sondern zusätzlich stoffschlüssig mit den Seitenflächen 21 und 22 des Eckbalkens 69verbunden sein können. Auch die Stoßränder 30 und 31, mit denen die beiden rechtwinklig zueinander stehenden Eckstreifen 13 und 17 aneinander stoßen, können stoffschlüssig beispielsweise durch Kleben und/oder durch Verbindungselemente zur Erhöhung der Stabilität der Eckeinheit 2 verbunden sein.

Die vertikalen Stoßränder 30 und 31 können mit einem Verblendwinkel 29 bedeckt sein, der gleichzeitig die Stabilität der Eckeinheit 2 erhöhen kann und als Rammschutz bei Transporten, Montagen und im Ladenwarenverkehr dienen kann. Die Stoßränder können auch auf Gehrung, gefalzt oder durch andere Randfugenformen verbunden sein. In ersten und zweiten unteren Endbereichen 25 und 26 können die Eckstreifen 13 und 17 den auf dem Sitzkassenboden 11 stehenden Eckbalken 69 seitlich überragen. Diese unteren Endbereiche 25 und 26 der Eckstreifen 13 und 17 können zusätzlich mit ersten und zweiten Bodenrandflächen 27 und 28 des Sitzkassenbodens 11 verschraubt sein. Die Stabilität der auswechselbaren Eckeinheit 2 kann dadurch erhöht werden, dass die Holzschrauben für den Ecksockel 12 des Eckbalkens 69 durch den Eckbereich des Sitzkassensockels 10 geführt werden.

Der erste Eckstreifen 13 weist eine erste vertikale Randseite 14 auf, die erste Scharnierpositionen 15 für eine erste Zugangstürposition 16 aufweisen kann. Der zweite Eckstreifen 17 weist entsprechend eine zweite vertikale Randseite 18 mit zweiten Scharnierpositionen 19 für eine zweite Zugangstürposition 20 auf. Damit ist es möglich, an einem Sitzkassengrundmodell einer derartigen Eckeinheit 2 unterschiedliche Zugangstürpositionen 16 und 20 zu realisieren.

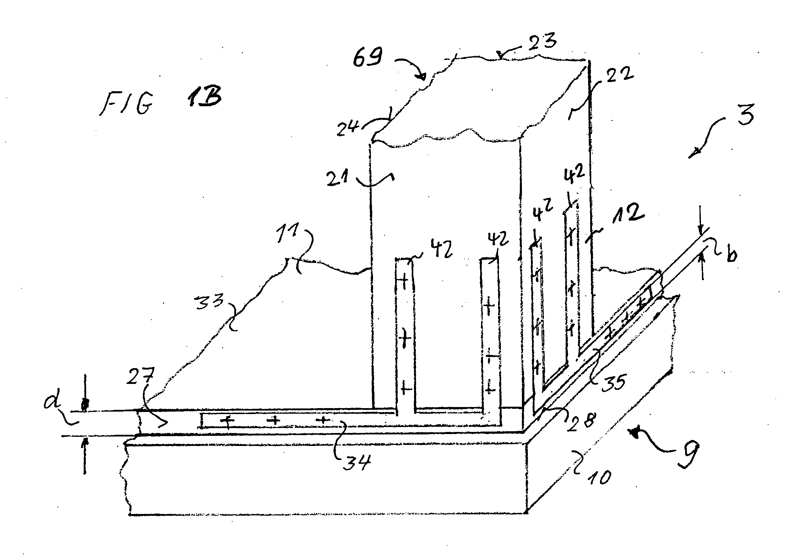

Figur 1B zeigt eine schematische perspektivische Ansicht einer Eckeinheit 3 gemäß einer zweiten Ausführungsform der Erfindung. Während die Eckstreifen 13 und 17, wie sie Figur 1 zeigt, unverändert bleiben, wird hier eine Ausführungsform der Erfindung vorgestellt, bei der durch Flacheisenwinkel der Einsatz der in Figur 1 gezeigten Holzschrauben, die vertikal vom Sitzkassenboden oder vom Sitzkassensockel aus eingeführt werden müssen, vermieden werden, indem an die Bodenrandflächen 27 und 28 Flacheisenschenkel 34 und 35 in dieser Ausführungsform von Winkelbeschlägen angeschraubt werden, deren vertikale Schenkel 42 den Ecksockel 12 des hölzernen Eckbalkens 69 über Schraubverbindungen in einer stabilen Position halten, so dass beim Auswechseln oder Drehen der Eckeinheit 3 lediglich die Schraubverbindungen der Flacheisenschenkel auf den Bodenrandflächen 27 und 28 zu lösen sind. Dazu ist die Breite b der Flacheisenschenkel kleiner oder gleich der Dicke d des Sitzkassenbodens 11 in der Zugangsecke 9.

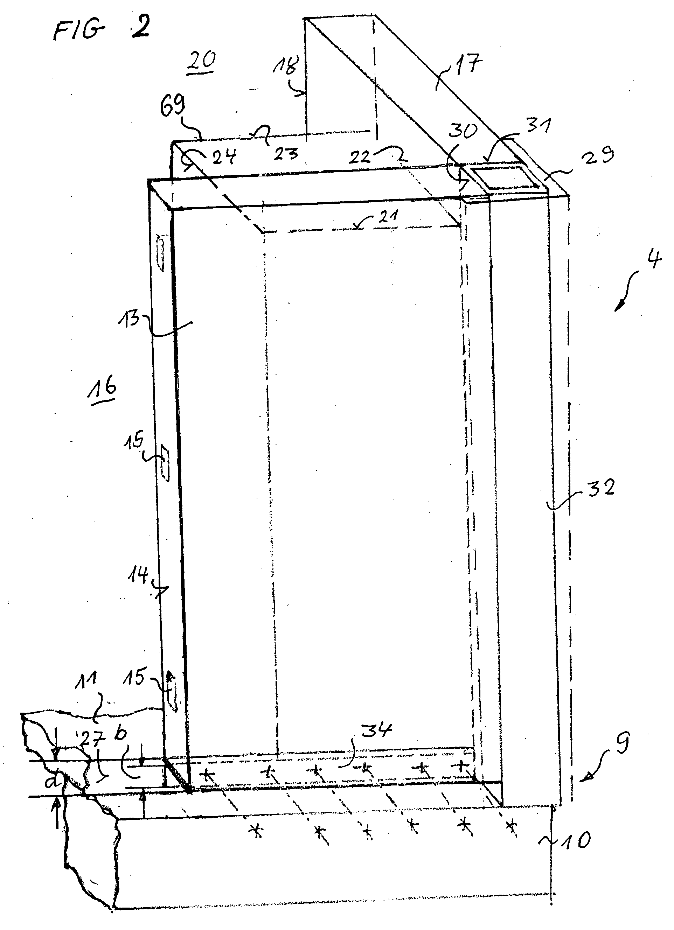

Figur 2 zeigt eine schematische perspektivische Ansicht einer Eckeinheit 4 gemäß einer dritten Ausführungsform der Erfindung. Die Eckeinheit 4 unterscheidet sich von den vorhergehenden Eckeinheiten dadurch, dass ein Stabilisierungsstab 32 aus Metall zusätzlich eingesetzt wird. Dieser Stabilisierungsstab 32 kann ein quadratisches Hohlrohr sein, dessen Breite der Dicke der Eckstreifen 13 und 17 angepasst ist, so dass die vertikalen Stoßränder 30 und 31 der Eckstreifen 13 und 17 mit entsprechenden Randseiten des Stabilisierungsstabes 32 verbunden werden können und gleichzeitig der Stabilisierungsstab 32 den in der Figur 1 gezeigten Verblendwinkel ersetzt. Dieser Stabilisierungsstab 32 weist in seinem Fußbereich zwei Flacheisenschenkel auf, von denen hier ein Schenkel 34 zu sehen ist, der an eine Bodenrandfläche 27 angeschraubt werden kann, um den Stabilisierungsstab 32 zu fixieren. In diesem Fall entspricht die Breite b des Flacheisenschenkels 34 in etwa der Dicke d des Sitzkassenbodens.

Komponenten mit gleichen Funktionen wie in den vorhergehenden Figuren werden mit gleichen Bezugszeichen gekennzeichnet und nicht extra erörtert.

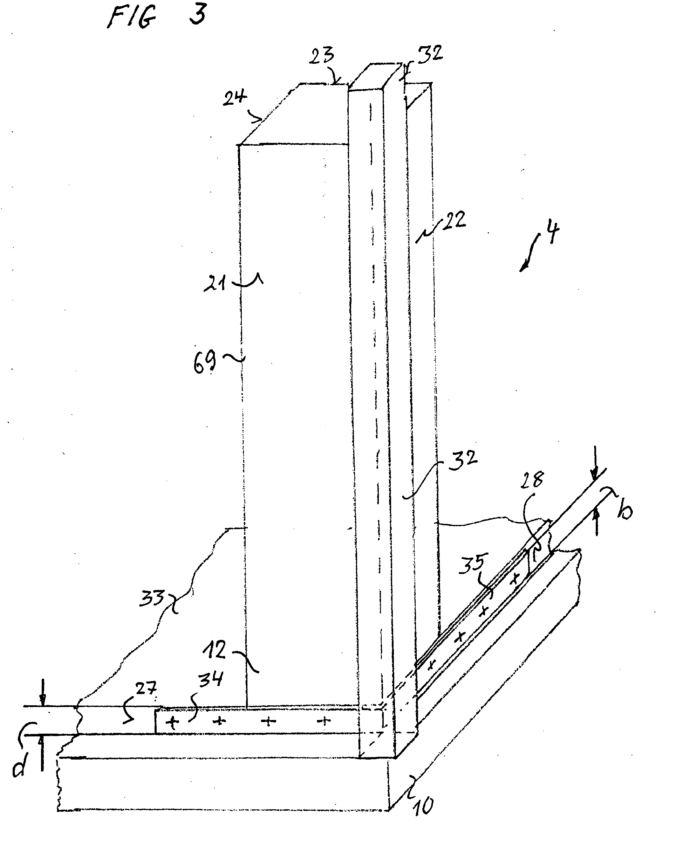

Figur 3 zeigt eine schematische perspektivische Ansicht der Eckeinheit 4 gemäß Figur 2 im Detail. Für diese Darstellung sind die Eckstreifen, wie sie in Figur 3 gezeigt werden, weggelassen, so dass deutlich wird, dass der Eckbalken 69 und der Stabilisierungsstab 32 lediglich mit ihren äußeren Eckkanten aneinander liegen.

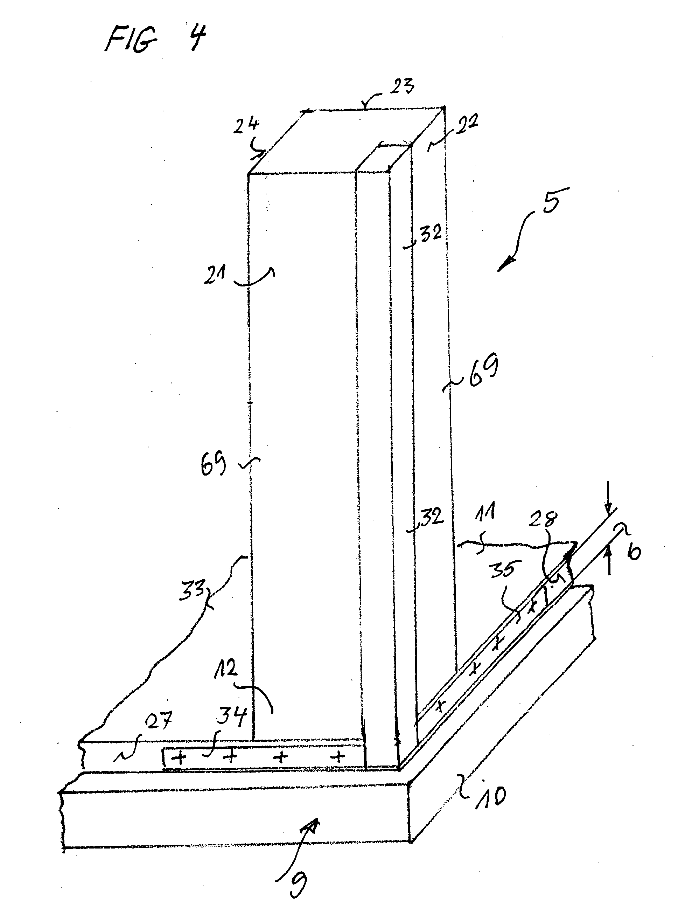

Figur 4 zeigt eine schematische perspektivische Ansicht einer Eckeinheit 5 gemäß einer vierten Ausführungsform der Erfindung. Bei dieser Ausführungsform der Erfindung ist der Stabilisierungsstab 32 in einer vertikalen Aussparung des Eckbalkens 69 eingelassen. Dadurch kann die Stabilität der Eckeinheit 5 deutlich gegenüber den vorhergehenden Ausführungsformen der Erfindung erhöht werden. Hier kann durch einfaches Lösen der Schraubverbindungen zwischen den Flacheisenschenkeln 34 und 35 des Stabilisierungsstabes 32 die Eckeinheit 5 mit wenigen Handgriffen ausgewechselt, abgebaut oder um 90° gedreht und an eine gegenüberliegende Zugangsecke wieder angebaut werden.

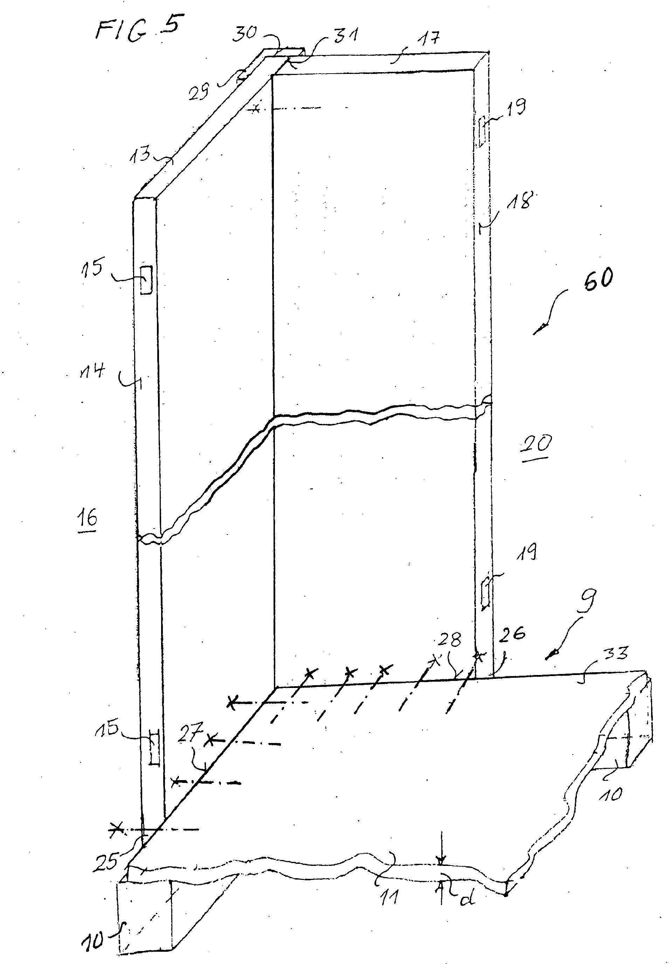

Figur 5 zeigt eine schematische perspektivische Ansicht einer Eckeinheit 60 gemäß einer fünften Ausführungsform der Erfindung. Die Eckeinheit 60 besteht in dieser Ausführungsform der Erfindung im Wesentlichen aus zwei Bauelementen dem ersten Eckstreifen 13 und dem zweiten Eckstreifen 17 die unter einem Winkel zu der Eckeinheit 60 verbunden sind. Der erste Eckstreifen 13 weist auf seiner vertikalen Randseite 14 erste Scharnierpositionen 15 für die erste Zugangstürposition 16 zu dem Sitzkassengrundmodell 1 auf. Der zweite Eckstreifen 17 weist auf seiner vertikalen Randseite 18 zweite Scharnierpositionen 19 für die zweite Zugangstürposition 20 zu dem Sitzkassengrundmodell 1 auf. Ferner ist die Eckeinheit 60 aus den erstem und den zweitem Eckstreifen 13 bzw. 17 in unteren Endbereichen 25 und 26 des ersten und des zweiten Eckstreifens 13 bzw. 17 mindestens im Bereich eines Sitzkassenbodens 11 lösbar fixiert. Zur Stabilitätserhöhung können die Eckstreifen 13 und 17 nach unten derart verlängert sein, dass die ersten und zweiten Endbereiche 25 und 26 der Eckstreifen 13 und 17 zusätzlich an einem Eckbereich des Sitzkassensockels 10 lösbar fixiert sein können.

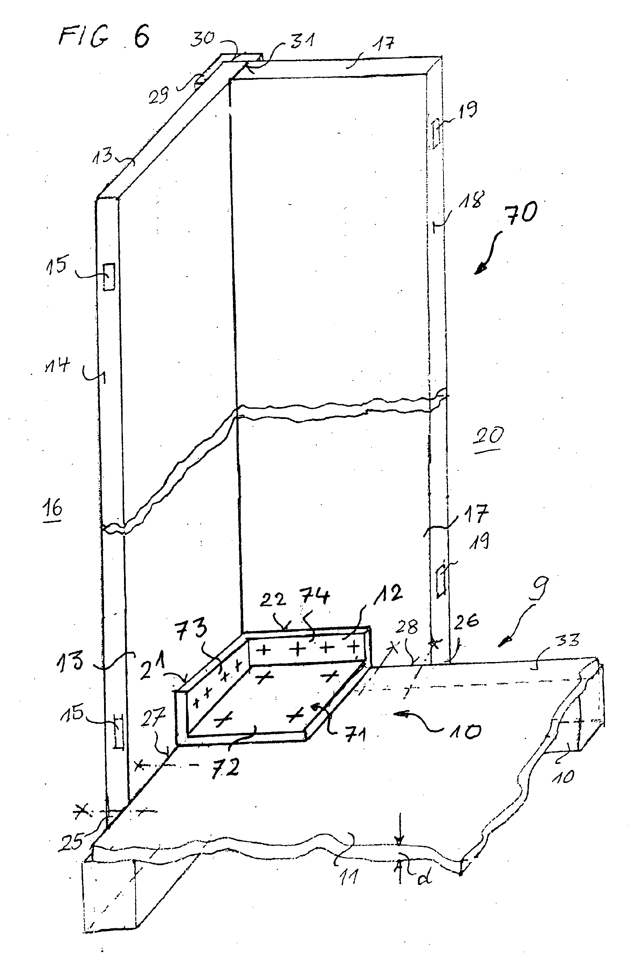

Figur 6 zeigt eine schematische perspektivische Ansicht einer Eckeinheit 70 gemäß einer sechsten Ausführungsform der Erfindung. Die Eckeinheit 70 weist einen in einem Ecksockelbereich 10 auf einem Sitzkassenboden 11 der Zugangsecke 9 des Sitzkassengrundmodells lösbar fixierten Ecksockel 12 auf. Ein erster Eckstreifen 13 mit einer vertikalen Randseite 14, die erste Scharnierpositionen 15 für eine schwenkbare erste Zugangstürposition 16 zu dem Sitzkassengrundmodell aufweist, ist auf einer Seite des Ecksockels 12 fixieret. Ein zweiter Eckstreifen 17, der auf einer vertikalen Randseite 18 zweite Scharnierpositionen 19 für eine schwenkbare zweite Zugangstürposition 20 zu dem Sitzkassengrundmodell aufweist, ist in einem rechten Winkel zu dem erster Eckstreifen 13 angeordnet. Untere Endbereiche 25, 26 des ersten und des zweiten Eckstreifens 13 und 17 sind auf Seitenflächen 21 und 22 des Ecksockels 12 lösbar fixiert.

Wie Figur 6 zeigt, ist der Ecksockel 12 als Metallwinkel 71 mit metallischer Grundplatte 72 ausgebildet, und die metallische Grundplatte 72 ist in der Zugangsecke 9 lösbar fixiert, und an den Seitenflächen 21 und 22 von vertikale Schenkeln 73 und 74 des Metallwinkels 71 sind die Eckstreifen 13 und 17 zu der Eckeinheit 70 fixiert. Die Grundplatte 72 kann auch unterhalb des Bodens 11 angebracht werden. Dadurch ist Sie weniger oder nicht mehr sichtbar.

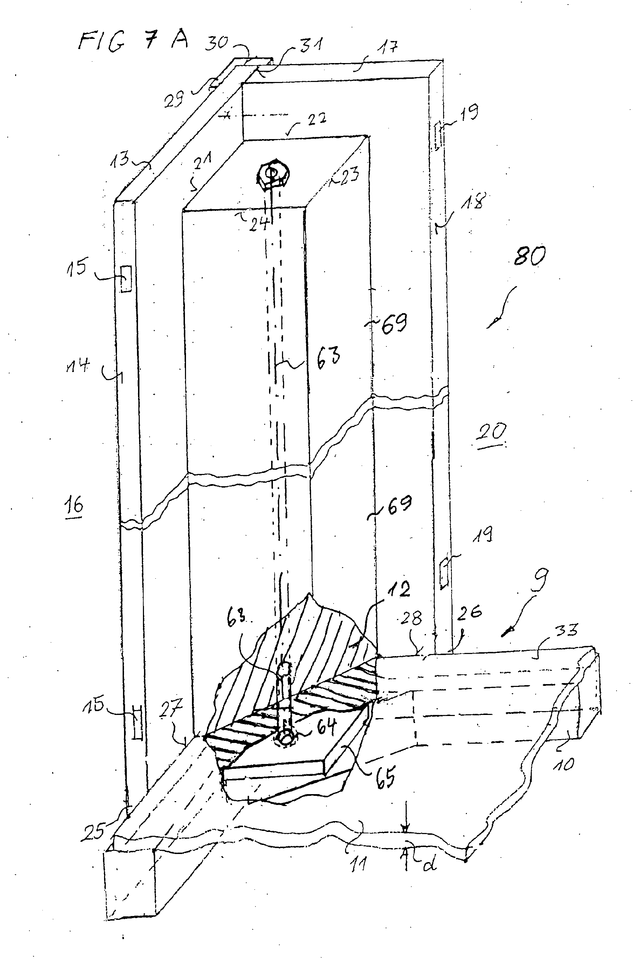

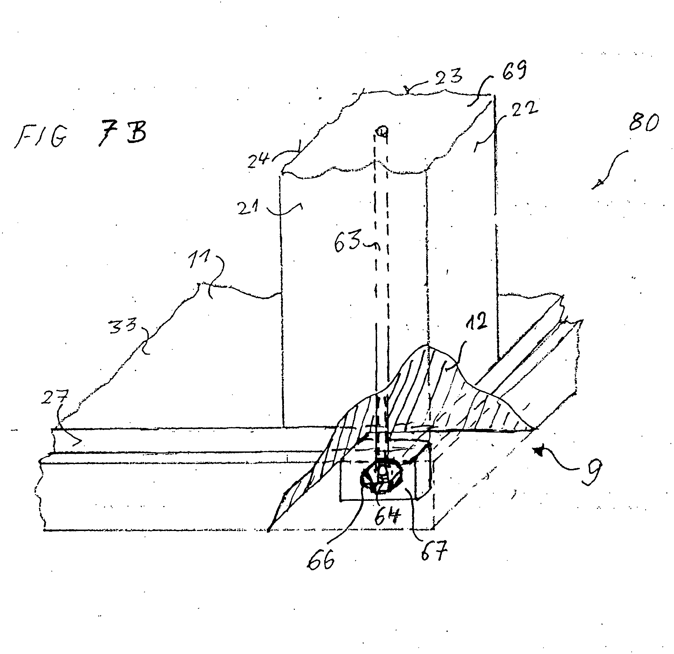

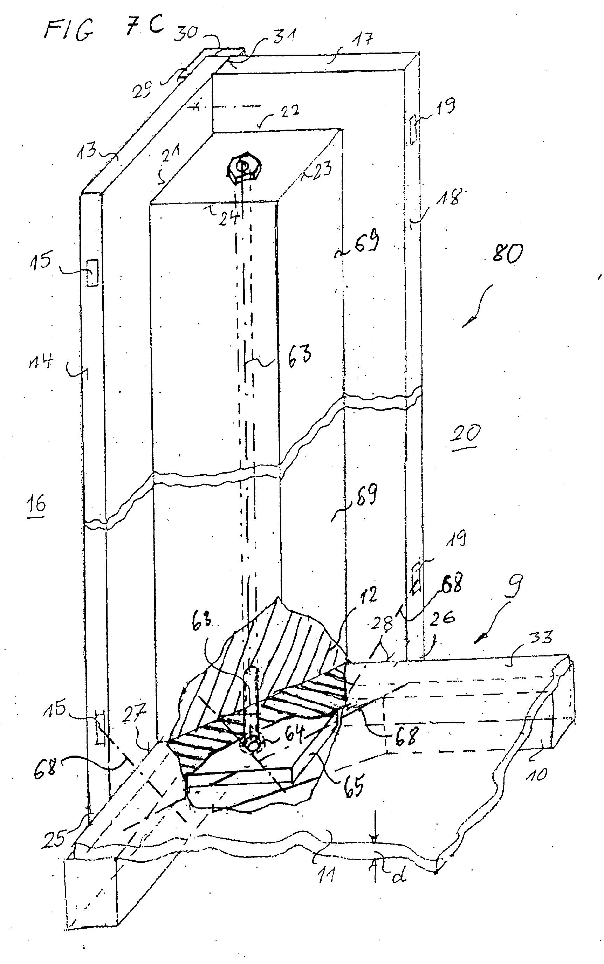

Figur 7 zeigt mit den Figuren 7A, 7B und 7C schematische Ansichten einer Eckeinheit 80 gemäß einer siebten Ausführungsform der Erfindung. Durch den Eckbalken 69 mit Ecksockel 12 und den Boden 11 erstreckt sich eine Langschraube 63, die als Spannschraube den Eckbalken 69 mit Ecksockel 12 auf den Sitzkassenboden 11 in dem Ecksockelbereich 10 dadurch pressen kann, weil die Langschraube 63 mit einer Gewindebohrung 64 im Ecksockelbereich 10 zusammenwirkt. Die Gewindebohrung 64 kann in eine Metallplatte 65 eingearbeitet sein, oder durch eine Mutter, die mit der Metallplatte 65 stoffschlüssig verbunden ist, gebildet werden.

Auch ist es möglich, in dem Ecksockelbereich 10 einen Hartholzklotz 67 oder einen Kunststoffklotz vorzusehen, wie es Figur 7B zeigt, in den eine Mutter 66 für die Fixierung der Langschraube 63 verdrehsicher eingelassen ist. Die Figur 7 C zeigt darüber hinaus mit strickpunktierten Linien die Möglichkeit in unterschiedlichen Richtungen auch diagonal oder von schräg oben nach schräg unten weitere Holzschrauben vorzusehen, welche die Eckeinheit 80 weiter verfestigen und stabilisieren. Neben den bereits oben als Materialien für den Eckbalken 69 erwähnten Holz- oder Kunststoffmaterialien, können für eine derartige Eckeinheit 80 auch Metallkonstruktionen insbesondere für den Ecksockel 12 eingesetzt werden.

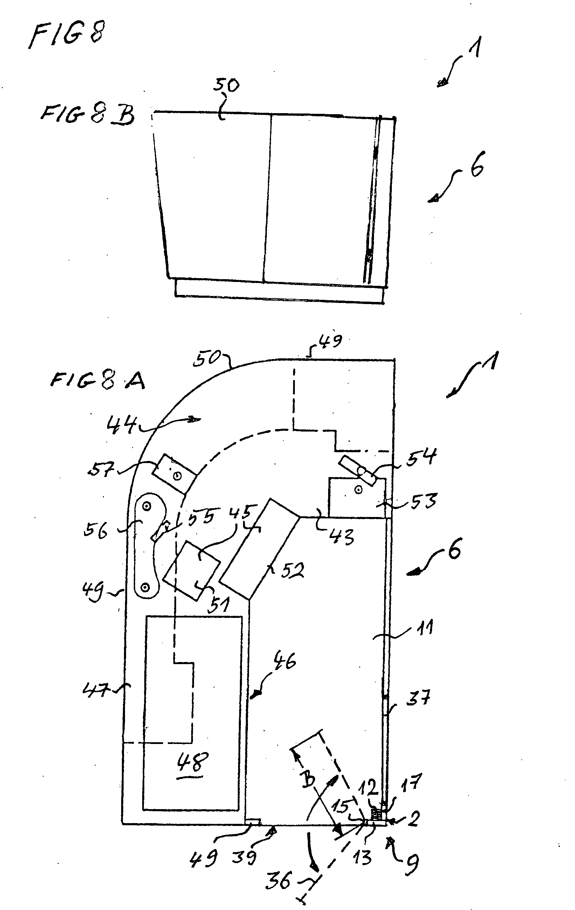

Die nachfolgenden Figuren 8 bis 13 zeigen mögliche Modifikationen des Sitzkassengrundmodells 1.

Figur 8 zeigt mit den Figuren 8A und 8B schematische Ansichten einer linksseitigen Sitzkasse als erste Modifikation des Sitzkassengrundmodells 1. Dabei zeigt die Figur 8A eine Draufsicht und die Figur 8B eine Seitenansicht.

Das Sitzkassengrundmodell 1 besteht, wie es die Figuren 8A und 8B zeigen, aus einem Sitzkassenkorpus 50, der im Wesentlichen Außenwände 49 aufweist und eine horizontale Servicefläche 43 im Sitzkassenservicebereich 44 zur Verfügung stellt. In dem Sitzkassenservicebereich 44 ist ein Registrier- und Kassierbereich 45 mit einem Barcodeleser 51 und einer Geldkassette 52 angeordnet. Außerdem kann sich im Sitzkassenservicebereich 44 eine Eingabetastatur 53 für Waren, die nicht vom Barcodeleser 51 erfasst werden, befinden. Über der Servicefläche 43 ist für den Kunden gut sichtbar eine Kundenpreisanzeige 54 sowie eine weitere Datenanzeige 55 für das Sitzkassenpersonal angeordnet. Außerdem können Geldablageflächen 56 sowie Kartenlesegeräte 57 in dem Sitzkassenservicebereich 44 zur Verfügung stehen.

Die abzurechnende Ware wird dem Registrier- und Kassierbereich 45 des Sitzkassenservicebereichs 44 durch eine Warentransportbandeinrichtung 46 zugeführt. Diese Warentransportbandeinrichtung 46 weist einen Sichtrahmen 47 auf, so dass lediglich ein Warentransportbandbereich 48 eines Endlosbandes sichtbar ist, auf dem die Ware beispielsweise dem Barcodeleser 51 zugeführt werden kann. Die unterschiedlichen Servicegeräte in dem Sitzkassenservicebereich 44 sind in ähnlicher Weise in jedem Sitzkassenmodell vorhanden.

Jedoch kann die in Figur 8 gezeigte Sitzkasse als Sitzkassengrundmodell 1 bezeichnet werden, weil sie einen variabel gestaltbaren Zugangsbereich in einer Zugangsecke 9 aufweist, der mit einer auswechselbaren Eckeinheit 2 ausgestattet ist, an dem, wie in dieser Modifikation des Sitzkassengrundmodells 1 gezeigt, an ersten Scharnierpositionen 15 eines ersten Eckstreifens 13 der Eckeinheit 2 ein Zugangstürblatt 36 angeordnet ist, das einheitlich für die nachfolgenden Modifikationen des Sitzkassengrundmodells 1 eingesetzt werden kann. Jedes Zugangstürblatt 36 kann die Zugangstürposition 39 in einer rückwärtigen Außenwand 49 öffnen und schließen. Je nach örtlichen Gegebenheiten, ist es möglich die Türen auf der gegenüberliegenden Seite 49 zu befestigen und auf die Eckeinheit zu verzichten. In diesem Fall wird die Eckeinheit eventuell durch einen Türhalter ersetzt oder ein Türhalter integriert.

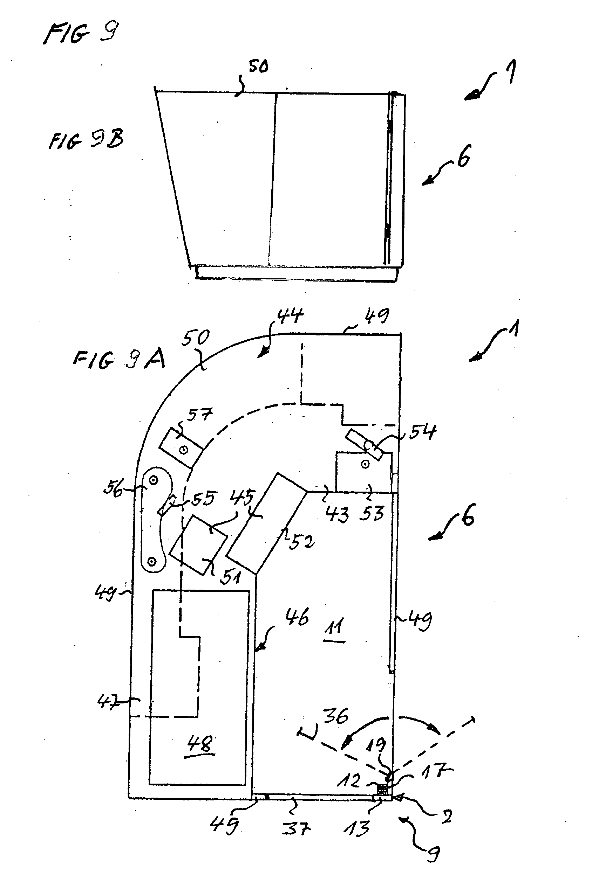

Figur 9 zeigt mit den Figuren 9A und 9B schematische Ansichten einer linksseitigen Sitzkasse 6 als zweite Modifikation des Sitzkassengrundmodells 1. Komponenten mit gleichen Funktionen wie in Figur 8 werden mit gleichen Bezugszeichen gekennzeichnet und nicht extra erörtert.

Der Unterschied besteht darin, dass nun ein Zugangstürblatt 36 an zweiten Scharnierpositionen 19 eines zweiten Eckstreifens 17 der Eckeinheit 2 angeordnet ist und ein Zugang zu dem Sitzkassengrundmodell 1 ermöglicht, wobei ein Wandsegment 37 in der Breite und Größe des Zugangtürblattes 36 nun in der rückwärtigen Außenwand 49 angeordnet ist.

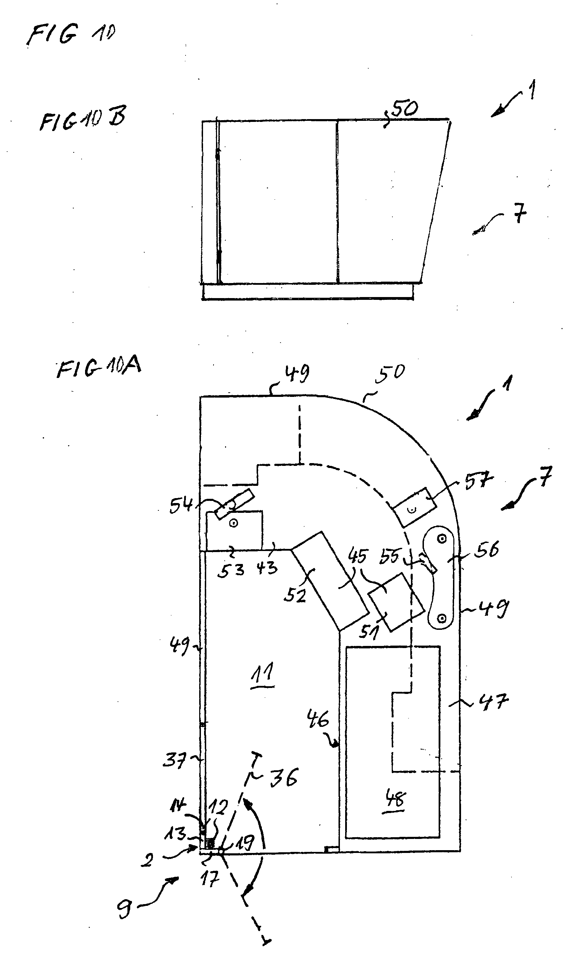

Figur 10 zeigt mit den Figuren 10A und 10B schematische Ansichten einer rechtsseitigen Sitzkasse 7 als weitere Modifikation des Sitzkassengrundmodells 1. Für das Anbringen der auswechselbaren Eckeinheit 2 in einer Zugangsecke 9 einer rechtsseitigen Sitzkasse 7 wird die Eckeinheit 2 lediglich um 90° gedreht, so dass nun die hintere Seite der rechtsseitigen Sitzkasse 7 ein Zugangstürblatt 36 aufweist, das an den zweiten Scharnierpositionen 19 des zweiten Eckstreifens 17 angeordnet ist. Ein Wandsegment 37 in der Größe eines Zugangstürblattes 36 schließt dabei die seitliche Außenwand 49 am ersten Eckstreifen 13 ab. Dazu werden Koppelelemente in den ersten Scharnierpositionen 15, die das Wandsegment 37 an einer ersten vertikalen Randseite 14 des ersten Eckstreifens 13 fixieren, angeordnet.

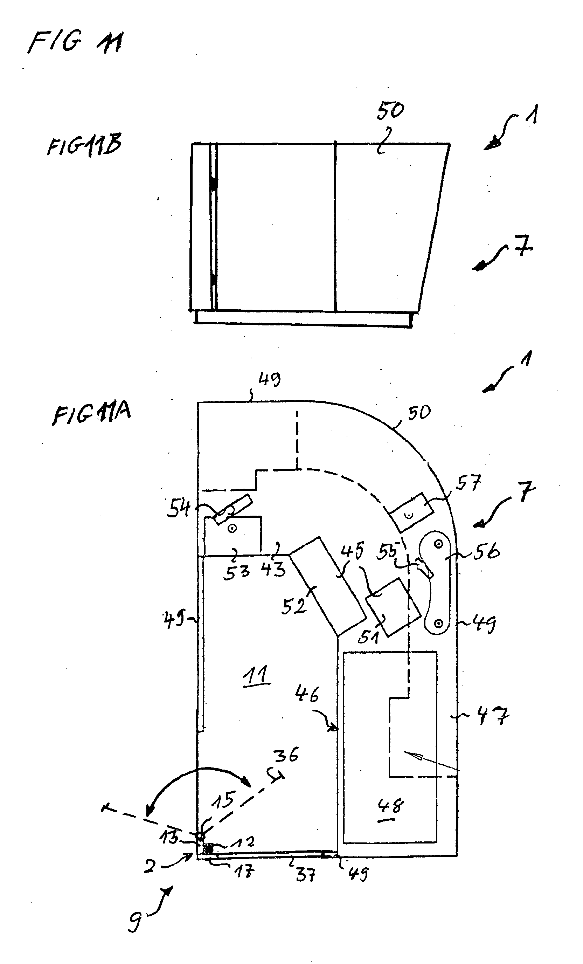

Figur 11 zeigt mit den Figuren 11A und 11B schematische Ansichten einer rechtsseitigen Sitzkasse 7 als weitere Modifikation des Sitzkassengrundmodells 1. Bei dieser Modifikation wird das Zugangstürblatt 36 an einer seitlichen Außenwand angebracht und dafür ein Wandsegment 37 an der hinteren Außenseite 49 des Sitzkassengrundmodells 1 angeordnet.

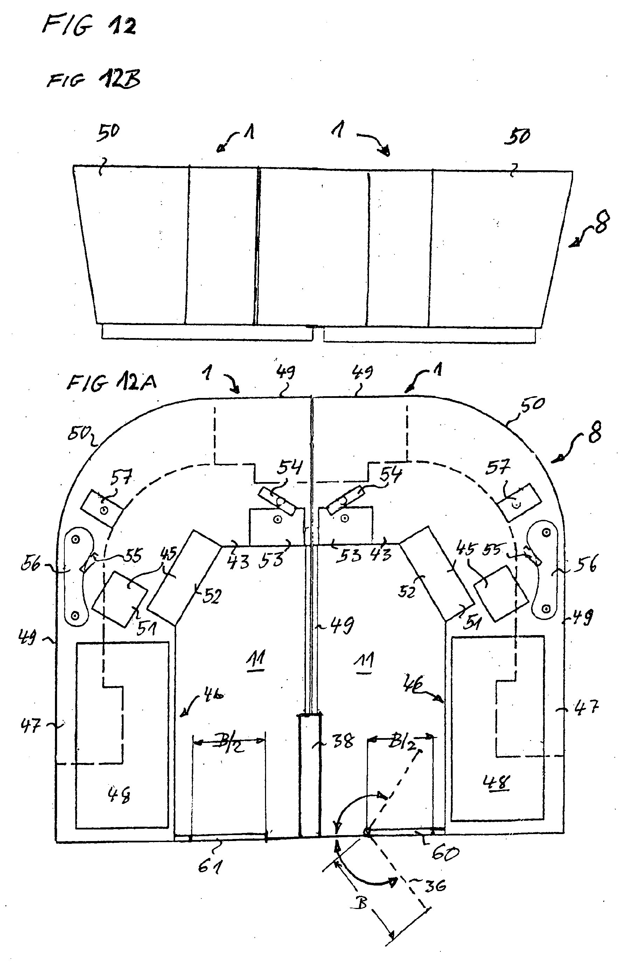

Figur 12 zeigt mit den Figuren 12A und 12B schematische Ansichten einer Sitzkasseninsel 8 aus zwei Sitzkassengrundmodellen als weitere Modifikation der Sitzkassengrundmodelle 1. Wobei die Sitzkassengrundmodelle 1 lediglich mit ihren seitlichen Außenseiten 49 zusammengestellt werden und gleichzeitig die auswechselbare Eckeinheit entfernt wird. Anstelle der Eckeinheit wird lediglich ein Bodenabdeckelement 38 mit einer Rollbereichsbrenzung in dem Zugangsbereich der Sitzkasseninsel 8 angeordnet und wie Figur 10A zeigt, ein zentrales Zugangstürblatt 36 an einem Wandsegment 60 angeordnet, das die halbe Zugangstürblattbreite B/2 aufweist. Ein gleichgroßes Wandsegment 61 mit der Breite B/2 wird gegenüberliegend an der rückwärtigen Außenwand der Sitzkasseninsel 8 angeordnet, so dass nun das Zugangstürblatt 36 als zentrales Zugangselement zu der Sitzkasseninsel 8 führt.

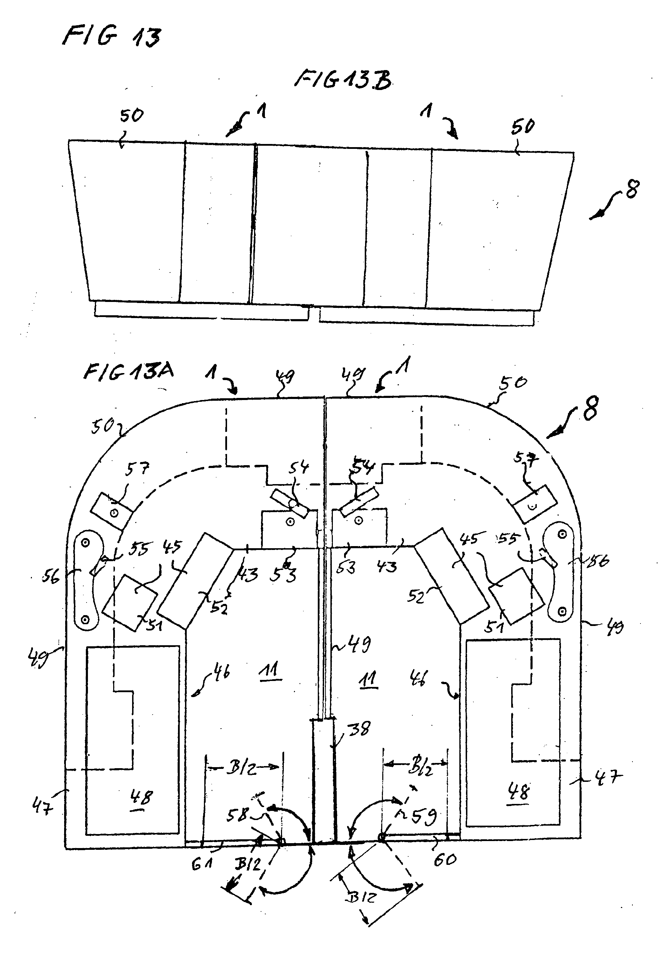

Figur 13 zeigt mit den Figuren 13A und 13B schematische Ansichten einer Modifikation der Sitzkasseninsel gemäß Figur 10 mit zwei Sitzkassengrundmodellen. Anstelle eines Zugangstürblattes 36 mit der Türblattbreite B, kann, wie in dieser Ausführungsform der Erfindung mit Figur 12 gezeigt, das Zugangstürblatt in zwei Zugangstürflügel 58 und 59 aufgeteilt werden, die entsprechend jeweils nur noch eine Flügelbreite B/2 aufweisen und beispielsweise an Schwingscharnieren an den Wandsegmenten 61 und 62 schwenkbar fixiert sind.

### Bezugszeichenliste

- 1: Sitzkassengrundmodell
- 2: Eckeinheit (1. Ausführungsform)
- 3: Eckeinheit (2. Ausführungsform)
- 4: Eckeinheit (3. Ausführungsform)
- 5: Eckeinheit (4. Ausführungsform)
- 6: linksseitige Sitzkasse
- 7: rechtsseitige Sitzkasse
- 8: Sitzkasseninsel
- 9: Zugangsecke
- 10: Eckbereich des Sitzkassensockels
- 11: Sitzkassenboden
- 12: Ecksockel
- 13: erster Eckstreifen
- 14: erste vertikale Randseite
- 15: erste Scharnierpositionen
- 16: erste Zugangstürposition
- 17: zweiter Eckstreifen
- 18: zweite vertikale Randseite
- 19: zweite Scharnierpositionen
- 20: zweite Zugangstürposition
- 21: Seitenfläche von 12
- 22: Seitenfläche von 12
- 25: erster unterer Endbereich
- 26: zweiter unterer Endbereich
- 27: erste Bodenrandfläche
- 28: zweite Bodenrandfläche
- 29: Verblendwinkel
- 30: erster vertikaler Stoßrand
- 31: zweiter vertikaler Stoßrand
- 32: Stabilisierungsstab
- 33: Sitzkassenbodenbereich
- 34: Flacheisenschenkel
- 35: Flacheisenschenkel
- 36: Zugangstürblatt
- 37: Wandsegment
- 38: Bodenabdeckelement
- 39: Zugangstürposition eines Wandsegmentes
- 42: Schenkel
- 43: Servicefläche
- 44: Sitzkassenservicebereich
- 45: Registrier- und Kassierbereich
- 46: Warentransportbandeinrichtung
- 47: Sichtrahmen
- 48: Warentransportbandbereich
- 49: Außenwand
- 50: Sitzkassenkorpus
- 51: Barcodeleser
- 52: Geldkassette
- 53: Eingabetastatur
- 54: Kundenpreisanzeige
- 55: Datenanzeige
- 56: Geldablagefläche
- 57: Kartenlesegerät
- 58: Zugangstürflügel
- 59: Zugangstürflügel
- 60: Eckeinheit (5. Ausführungsform)
- 61: Wandsegment
- 62: Wandsegment
- 63: Langschraube
- 64: Gewinde
- 65: Metallplatte
- 66: Mutter
- 67: Hartholzklotz
- 68: strickpunktierte Linie
- 69: Eckbalken
- 70: Eckeinheit (6. Ausführungsform)
- 71: Metallwinkel
- 72: Grundplatte
- 73: Schenkel
- 74: Schenkel
- 80: Eckeinheit (7. Ausführungsform)

- B: Zugangstürblattbreite
- b: Breite der Flacheisenschenkel
- d: Dicke des Sitzkassenbodens

## Patentansprüche

1. Sitzkassengrundmodell (1) mit auswechselbarer Eckeinheit (2 bis 5) in einer Zugangsecke (9) des Sitzkassengrundmodells (1) aufweisend:
- einen ersten Eckstreifen (13) für eine erste Zugangstürposition (16);
- einen zweiten Eckstreifen (17), der für eine zweite
Zugangstürposition (20) angeordnet ist;
wobei der erste und der zweite Eckstreifen (13, 17) in einem Winkel zueinander zu der Eckeinheit verbunden sind und wobei der erste Eckstreifen (13) auf einer vertikalen Randseite (14) eine erste Scharnierposition (15) für die erste Zugangstürposition (16) zu dem Sitzkassengrundmodell (1) aufweist, und wobei der zweite Eckstreifen (17) auf einer vertikalen Randseite (18) eine zweite Scharnierposition (19) für die zweite Zugangstürposition (20) zu dem Sitzkassengrundmodell (1) aufweist, und wobei untere Endbereiche (25, 26) des ersten und des zweiten Eckstreifens (13, 17) als Eckeinheit mindestens im Bereich eines Sitzkassenbodens (11) lösbar fixiert sind.

2. Sitzkassengrundmodell nach Anspruch 1, wobei die Eckeinheit (2 bis 5) einen Ecksockel (12) aufweist, an dem die Eckstreifen (13, 17) zu der Eckeinheit (2 bis 5 )fixiert sind, und wobei der Ecksockel (12) mit einem Eckbereich des Sitzkassensockels (10) der Zugangsecke (9) des Sitzkassengrundmodells (1) lösbar verbunden ist.

3. Sitzkassengrundmodell nach Anspruch 1, wobei der Ecksockel (12) als Metall-, Holz- oder Kunststoffsockel ausgebildet und mit der Zugangsecke (9) lösbar verbunden ist und vertikale Seitenflächen (21, 22) aufweist, an welchen die Eckstreifen (13, 17) fixierbar sind.

4. Sitzkassengrundmodell nach Anspruch 1, wobei der Ecksockel (12) einen Sockelbereich eines Eckbalkens (69) bildet der mit der Zugangsecke (9) lösbar verbunden ist und vertikale Seitenflächen (21, 22) aufweist, an welchen die Eckstreifen (13, 17) fixierbar sind.

5. Sitzkassengrundmodell nach einem der vorhergehenden Ansprüche, wobei die Eckstreifen (13, 17) mit unteren Endbereichen (25, 26) den Ecksockel (12) nach unten hin überragen, und wobei die nach unten überragenden Endbereiche (25, 26) der Eckstreifen (13, 17) an Bodenrandflächen (27, 28) der Zugangsecke (9) des Sitzkassengrundmodells (1) lösbar fixiert sind.

6. Sitzkassengrundmodell nach einem der vorhergehenden Ansprüche, wobei die Eckeinheit (2 bis 5) einen vertikalen Stabilisierungswinkel oder Verblendwinkel (29) aufweist, der auf vertikalen Stoßrändern (30, 31) der Eckstreifen (13, 17) lösbar fixiert ist.

7. Sitzkassengrundmodell nach einem der Ansprüche 1 bis 5, wobei die Eckeinheit (2 bis 5) einen Stabilisierungsstab (32) mit einem quadratischen, dreieckigen oder runden Querschnittsprofil aufweist, der mit vertikalen Stoßrändern (30, 31) der Eckstreifen (13, 17) stoffschlüssig verbunden ist.

8. Sitzkassengrundmodell nach Anspruch 7, wobei der Stabilisierungsstab im Sitzkassenbodenbereich (33) Flacheisenschenkel (34, 35) aufweist, die in einem rechten Winkel zueinander und zu dem Stabilisierungsstab (32) angeordnet sind, und wobei die Flacheisenschenkel (34, 35) eine Breite (b) aufweisen, die der Dicke (d) des Sitzkassenbodens (11) in der Zugangsecke (9) entspricht, und wobei die Flacheisenschenkel (34, 35) mit dem Sitzkassenboden (11) lösbar fixiert sind.

9. Sitzkassengrundmodell nach einem der vorhergehenden Ansprüche, wobei an einem der Eckstreifen (13, 17) an den Scharnierpositionen (15, 19) Scharniere eines Zugangstürblattes (36) fixiert sind und an dem anderen der beiden Eckstreifen (13, 17) an den Scharnierpositionen (15, 19) mechanische Koppelelemente eines Wandsegmentes (37) fixiert sind, und wobei das Wandsegment (37) der Größe eines Zugangstürblattes (36) entspricht.

10. Sitzkassengrundmodell nach einem der vorhergehenden Ansprüche, wobei das Sitzkassengrundmodell (1) sowohl als linksseitig (6) zugängliche L-Sitzkasse als auch als rechtsseitig (7) zugängliche R-Sitzkasse durch Drehen der Eckeinheit um 90° und/oder durch verwenden spezieller Eckeinheiten für linksseitig (6) zugängliche oder rechtsseitig (7) zugängliche Sitzkasse einsetzbar ist.

11. Sitzkassengrundmodell nach einem der vorhergehenden Ansprüche, wobei zwei Sitzkassengrundmodelle (1) zu einer Sitzkasseninsel (8) unter Auswechseln der Eckeinheiten (2 bis 5) gegen ein Bodenabdeckelement (38) und Anbauen eines zentralen Zugangstürblattes (36) an Stelle der Eckeinheit (2 bis 5) zusammenstellbar sind.

12. Sitzkassengrundmodell nach Anspruch 11, wobei das zentrale Zugangstürblatt (36) bei entfernter Eckeinheit (2 bis 5) das Zugangstürblatt (36) einer einzelnen links- oder rechtszugänglichen Sitzkasse aufweist, und wobei Türscharniere des zentralen Zugangstürblattes (36) an einer Zugangstürposition einer vertikalen Randseite eines Wandsegmentes (60, 61) von halber Zugangstürblattbreite (B/2) angeordnet sind.

13. Sitzkassengrundmodell nach einem der vorhergehenden Ansprüche, wobei Holzschrauben, die von unten durch den Sitzkassenboden (11) der Zugangsecke (9) in einen Eckfußbereich des Ecksockels (12) und/oder in die unteren Endbereiche (25, 26) der Eckstreifen (13, 17) und/ oder in einen Eckbalken (69) lösbar fixierend hineinragen.

14. Sitzkassengrundmodell nach einem der Ansprüche 1 bis 8, wobei wenigstens eine Schraube durch den Ecksockel hindurchragt oder durch einen Eckbalken (69) und in einem Ecksockelbereich (10) mit einer Gewindebohrung einer Metallplatte oder einer eingelegten Mutter zusammenwirkt und den Ecksockel auf dem Sitzkassenboden in dem Eckbereich des Sitzkassengrundmodells fixiert.
